## Europäisches Patentamt
## European Patent Office
## Office européen des brevets

(11) Publication number: **0 068 718**
**B1**

(12) **EUROPEAN PATENT SPECIFICATION**

(45) Date of publication of patent specification: **30.04.86**

(51) Int. Cl.⁴: **B 65 D 1/28** // B65D21/02, B65D85/72, B65B7/28

(21) Application number: **82303117.4**

(22) Date of filing: **16.06.82**

(54) **Hermetically sealable containers and method of sealing.**

(30) Priority: **19.06.81 US 275395**

(43) Date of publication of application:
**05.01.83 Bulletin 83/01**

(45) Publication of the grant of the patent:
**30.04.86 Bulletin 86/18**

(84) Designated Contracting States:
**AT BE CH DE FR GB IT LI LU NL SE**

(56) References cited:
**DE-A-2 130 682**
**DE-B-1 061 643**
**DE-B-1 302 048**
**GB-A-1 441 666**
**US-A-3 409 167**
**US-A-3 527 020**
**US-A-3 831 745**
**US-A-3 890 767**
**US-A-3 893 567**

(73) Proprietor: **AMERICAN CAN COMPANY**
**American Lane**
**Greenwich, Connecticut 06830 (US)**

(72) Inventor: **Caner, Ali R.**
**9016 Robin Hill Drive**
**Woodstock Illinois 60098 (US)**
Inventor: **Spencer, Kenneth B.**
**354 Sharon Drive**
**Barrington Illinois 60010 (US)**

(74) Representative: **Harvey, David Gareth et al**
**Graham Watt & Co. Riverhead**
**Sevenoaks Kent TN13 2BN (GB)**

Courier Press, Leamington Spa, England.

# Description

This invention relates to hermetically sealable containers and method of sealing. More particularly the invention concerns the filling and hermetic sealing of plastics bodied containers with hot liquid or semi-liquid products, and resides in improvements in the methods and structures for accomplishing hermetic sealing without deformation of the side wall of the container or premature breaking of the seal.

A demand has arisen for a thermoplastic container for storing commestibles needing heating to a liquid or semi-liquid state at temperatures of up to about 190°F (88°C) to facilitate filling the container, which must then be hermetically sealed with a heat sealed peelable closure disc. This container can be used to package foods commonly classified as hot fillable, such as jams and fruit juices, inter alia. By hot-filling at a temperature of 190°F (88°C) the container and contents are sterilized and do not require additional preservatives. The higher the temperatures that must be used, the greater the likelihood of creating stresses in the container and/or its seal because of high internal vacuums developed upon subsequent cooling of the product, primarily resulting from the condensation of steam in the head space of the sealed container. It is important that the side wall of the container be kept free of deformation or paneling while at the same time maintaining the hermetic seal to prevent spoilage of the product during shipping and storage.

Containers for warm or hot filling, and intended to resist internal vacuum, are described in US—A—3,409,167, DE—B—1,302,048 and DE—A—1,061,643.

A thermoplastic-bodied container for storing motor oils is the subject of US—A—3,409,167. This container has a flexible bottom so that depletion of gaseous components causing a change in internal pressure can be compensated for by the flexing action on the bottom. According to the patent, the container was formed with a relatively thick side wall and a relatively thin bottom wall to prevent paneling of the side wall while permitting flexing of the bottom wall.

DE—B—1,302,048 discloses a plastics container for filling with hot food products; the container is protected from sidewall paneling or deformation due to the development of a vacuum inside the container upon cooling of the food product therein. The container comprises a flanged, open-top body with a closure disc secured across its flanged top and with a bottom having a flexible bottom configuration that is able to adopt an inwardly-flexed position to reduce the vacuum created when the food product cools.

The invention aims to provide an improved container of the general kind disclosed in DE—B—1,302,048. The invention thus relates to a hermetically sealed multilayer thermoplastic bodied container, including a gas barrier layer, the container being capable of holding hot filled products such as jams or the like, and which can be easily opened by simply peeling the container closure from the container body. The peelable closure is to have a peel strength sufficiently low to permit easy opening by the consumer, and yet high enough to prevent rupture of the seal when subjected to the vacuum conditions which develop after the container is filled and sealed. By providing a container according to the invention with flexible top and bottom portions both of which are adapted to move inwardly as the hot filled product cools, paneling or deformation of the side wall of the container and rupture of its hermetic seal is prevented.

According to the present invention, there is provided a hot-filled, food-containing plastics container which is protected from sidewall paneling or deformation due to the development of a vacuum inside the container upon cooling of the food product therein, the container comprising a flanged, open-top body with a closure disc secured across its flanged top and with a bottom having a flexible bottom configuration that is able to adopt an inwardly-flexed position to reduce the vacuum created when the food product cools, characterised in that the container when hot filled and hermetically closed has a head space left above the food product, which has a significant moisture vapor pressure when introduced into the container at a temperature of e.g. up to about 190°F (88°C) so that, upon cooling to ambient temperature, vacuum is developed by condensation of the moisture vapor in the head space, the container being further characterised by:

(1) its open-top plastics body being of multilayer construction and including a gas barrier layer, and

(2) a gas-impermeable flexible closure disc being secured to the flange at the top of said body by means of an adhesive to provide an hermetic seal which (a) withstands the said vacuum developed during cooling, yet (b) has a peel strength affording easy peel removal of the disc from the flange;

the container after filling being further characterised in that its bottom wall, which is adapted by flexure means to flex inwardly, and the closure disc each move, from an unflexed, generally planar initial position at the time of hot filling and sealing, to an inwardly flexed position due to the vacuum so as to reduce the vacuum as it develops during cooling, the headspace permitting inward movement of the closure disc, and the inward flexing of the closure disc and integral bottom cooperatively serving to dissipate a potentially high internal vacuum, whereby the side wall extending from the bottom wall to the flange is prevented from paneling and the hermetic seal is prevented from prematurely rupturing.

Also according to the invention, there is provided a method of packaging a food product in a plastics container having a closure sealed to a flange at the top of the body, the food product being introduced by hot filling e.g. at a temperature up to about 190°F (88°C) whereby an internal vacuum is allowed to develop in the container upon cooling of the product, the method being characterised by:

employing an open-top multi-layer plastics container body which includes a gas barrier layer and has a side wall extending from its top flange down to an integral bottom wall, and the bottom wall—as is known—being adapted and allowed to flex inwardly in response to the development of the internal vacuum,

employing a flexible, gas barrier closure disc for closing the container,

filling the container with the hot foodstuff at a temperature as aforesaid, so as to leave an unfilled head space above the product in the container,

promptly closing the open top by securing the closure disc to the flange using an adhesive which provides an hermetic seal which withstands potentially high and enduring internal vacuum in the container yet nevertheless permits easy peel-stripping of the closure disc from the container, the disc being applied substantially flat across the top of the container body initially, and the disc being free to flex inwardly from its initial position due to the head space, and

after closing the container, allowing the product to cool, whereby inward flexings of both the bottom wall and closure disc, as vacuum develops in the container, cooperate to prevent a damagingly high internal vacuum forming such that, acting in concert the inward flexings prevent inward paneling of the side wall.

The multilayer container body can have uniform thickness and can be thermoformed. The lip portion or flange around its rim or periphery is for sealing with an easily· peelable heat-sealed closure disc made of a flexible flat sheet material after the container has been filled with a hot liquid. The bottom wall and top closure disc of the container are each capable of flexing in the manner of a diaphragm to relieve the internal vacuum resulting upon subsequent cooling of the liquid and thus prevent rupture of the seal or paneling of the side wall.

A preferred embodiment of the invention will now be described by way of example with reference to the accompanying drawings, in which:

Figure 1 is a side view of a pair of container bodies embodying the invention, the bodies being shown nested with the outer body in cross section to illustrate certain details of construction;

Figure 2 is a top view of Figure 1;

Figure 3 is an enlarged vertical cross-sectional view taken through the curled lip formed around the periphery of the container body, the view also showing portions of the peelable closure disc and a heated sealing plate adapted to heat-seal the disc onto the curled lip;

Figure 4 is an enlarged vertical cross-sectional view taken through the multiple layer wall of the container body;

Figure 5 is an enlarged vertical cross-sectional view taken through a bottom corner portion of the container body; and

Figure 6 is a schematic cross-sectional view of the filled and sealed container after the top closure disc and the bottom wall of the sealed container have flexed inwardly as the result of the reduced internal pressure created upon cooling of the hot filled product.

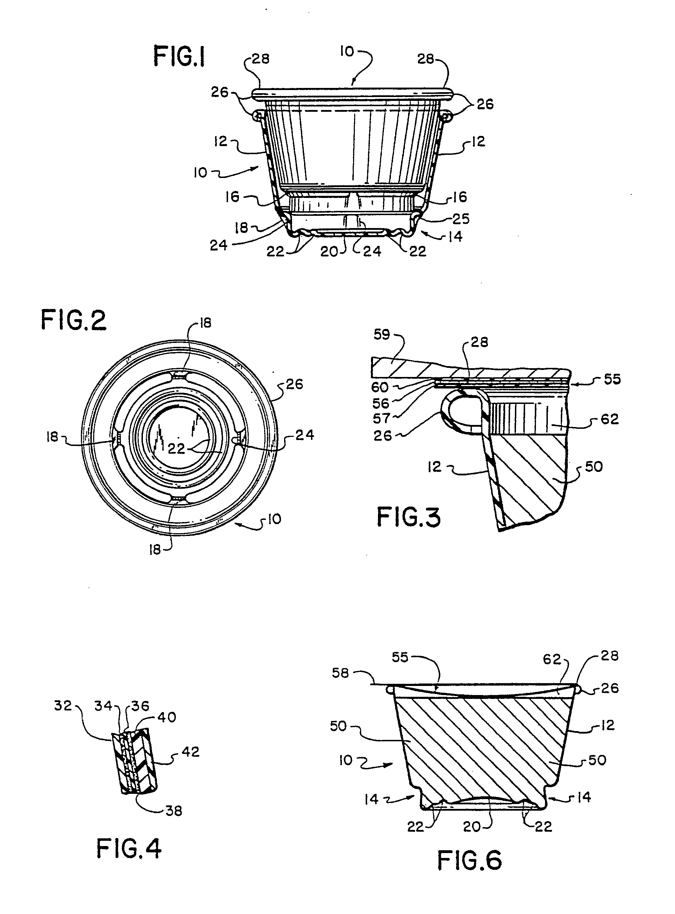

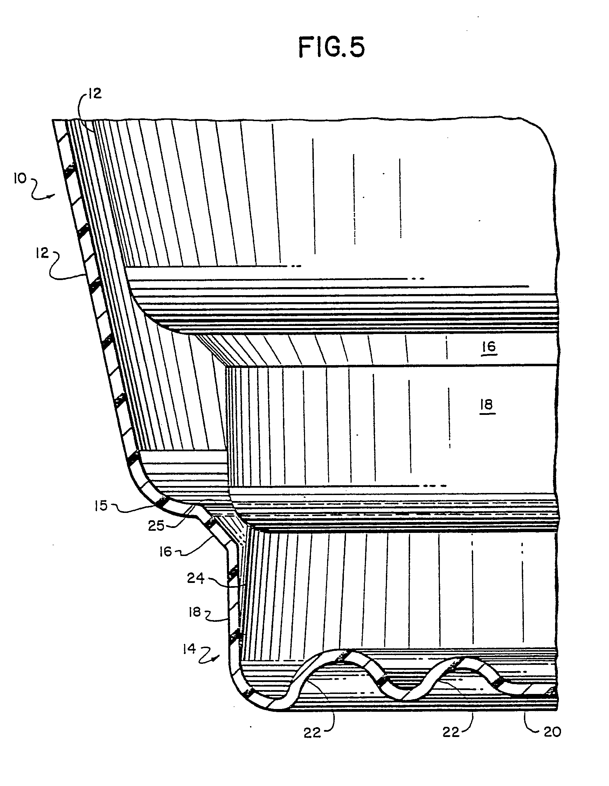

Referring to the drawings and in particular to Figure 1, nestable one piece thermoformed container bodies 10 embodying the principles of the invention are shown. Each container body 10 has a cup shape and is formed with a tapered main or side wall 12 permitting the bodies to stack, nested one in another. The bottom end of wall 12 merges into a pedestal base, generally indicated by the numeral 14, which forms the bottom end portion of the container. The base 14 includes a rounded corner portion 15 which connects the base 14 and the side wall 12, and an inwardly and downwardly angled reinforcing wall 16 which is disposed at about 45° angle to the container axis. The angled wall 16 merges into a short vertical wall 18 which in turn connects with a horizontal bottom wall 20. Wall 20 is formed with a plurality of annular grooves or corrugations 22 which permit diaphragmatic flexing of the wall 20, as will be hereinafter explained. The pedestal base 14 includes a plurality of spaced, vertical, inwardly-extending indentations 24 which at their upper ends create inwardly-extending ledge portions 25 facilitating non-wedging nesting of the container bodies 10, and also strengthening the bottom portion of the container body and helping to re-enforce it against deformation.

As best shown in Figure 3, the top of container body 10 is formed with a peripheral curled lip 26 having a top portion 28. The top portion 28 provides an annular sealing surface which is important from the standpoint of ensuring proper sealing of the container as will become more apparent hereinafter. A flat annular lip, rim or flange or combination thereof with a curled portion may also be used.

The materials used in the construction of container body 10 comprise multiple layers including an inner polyolefin layer 32 made preferably of polyethylene or polypropylene or blends thereof, an adhesive layer 34 made preferably of a compatible material such as a modified polypropylene or a modified polyethylene, and a barrier layer 36 made of a plastic material such as ethylene vinyl alcohol copolymer or Saran (Trade Mark) which is substantially impervious to oxygen. Next in order there is another compatible adhesive layer 38 similar or identical to the layer 34, a bulk layer 40 preferably but not necessarily consisting of reground scrap generated during manufacture of the bodies 10, and an outer polyolefin layer 42 preferably similar or identical in composition to the inner polyolefin layer 32.

It will be appreciated that the barrier layer 36 serves primarily to prevent oxygen from penetrating the container after filling and sealing, although it may also serve as a barrier for other gases or fluids. The layer 40 functions primarily to add bulk and strength to the body at low cost. The thicknesses of the various body layers can be varied as desired and required, but it has been found that cup shaped bodies constructed from these multiple layers should have a total thickness of at least 15 mils (0.38 mm) and preferably of about 20 mils (0.50 mm).

In use of the invention, the container body 10 is filled with a hot liquid product such as jam 50 which has been heated to a temperature up to about 190°F (88°C). After filling, the container is sealed with a flat imperforate and impervious closure disc 55 which is preferably made of aluminum foil 56 provided on its undersurface with a heat sealable adhesive layer 57 capable of adhering to top portion 28 of the curled lip 26 of the body 10. If desired, a suitable oxygen-impervious thermoplastic material such as ethylene vinyl alcohol copolymer (EVOH) or saran may be substituted for the aluminum foil 56.

The closure disc 55 may be a laminate in which the aluminum foil 56 is laminated on one or both sides to a suitable layer of a protective plastic material such as a nylon, a polyester or a polyolefin, one of which may function as the adhesive 57 which adheres the disc 55 to the annular body portion 28. Preferably, the hot melt adhesive 57 is chosen to provide a peel strength sufficiently low in magnitude to permit easy peeling of the disc 55 from the body 10 when it is desired to open the container. It has been found that T-peel strengths (ASTM D 1876-72) on the order of about three pounds per inch (0.54 kg per cm) are ideal for the present purpose, since they permit easy opening of the container while at the same time providing sufficient strength to maintain the integrity of the seal during normal processing and handling of the container, as will be more fully described. Substantially higher T-peel strengths than the ideal peel strength such as greater than five pounds per inch (0.9 kg per cm) will provide the resistance necessary to maintain the seal integrity, but they prevent easy peelability of the closure disc.

The cover disc 55 is preferably formed with a small, integral, radially projecting opening tab 58 and may be applied in any suitable manner as by a flat, heated sealing ring or plate 59 which engages the upper layer 60 of the closure disc 55 and presses its peripheral edge portion against the top surface 28, while at the same time heating the disc 55 sufficiently to soften the adhesive 57 and cause it to heat-seal to the top annular surface 28. The contacting surface of the sealing plate 59 may be coated with Teflon (Trade Mark) or the like to prevent the upper surface of the closure disc 55 from sticking to it.

It will be appreciated that upon subsequent cooling of the hot filled product 50, the closure disc 55 and bottom wall 20 are pressed inwardly by atmospheric pressure, as a substantial partial vacuum is formed within the sealed container due primarily to condensation of moisture vapor which is present in the head space 62 of the filled and sealed container. For a completely rigid container, the vacuum formed upon cooling would be about 20 inches (50.8 cm) of mercury. The purpose of this container is for use with liquids that have a measurable vapor pressure when hot-filled such that upon cooling, a vacuum is generated. For commercial filling operations, head space 62 is desirable to prevent over-filling of the containers and spilling the contents just prior to the heat sealing operation. It will be further appreciated that because of this inward flexing of the closure disc 55 and bottom wall 20, the partial vacuum is substantially reduced and the stresses on the closure seal and the side wall relieved so that the container seal is maintained and deformation or paneling of the side wall 12 of the container is prevented. Annular grooves 22 provide the means for the flexing motion of bottom wall 20. Because the diameter of the pedestal wall 14 as defined is the minimum diameter of the container side, the stiffness at the juncture between the pedestal wall 14 and side wall 12 is stiffened. That stiffness is essential to permit the flexure at the annular grooves 22 and to prevent deformation at the juncture of the pedestal and side wall 12. It should be understood that the high internal vacuum formed within the sealed container also subjects the pedestal base 14 to a high pressure differential, and unless some provision is made to prevent it, could cause it to partially deform inwardly before or at the same time as the bottom wall 20 is being flexed inwardly. This undesirable result is prevented by the reinforcing wall 16 which supports the pedestal base 14 at the area of its greatest vulnerability, and thus limits the inward movement of the body 10 to the inward flexing of the bottom wall 20.

After cooling, and in the proper case solidification of the product 50, the container may be easily opened by the user grasping the opening tab 58 and pulling upwardly on it, thus breaking the adhesive bond and peeling the closure disc 55 from the top sealing surface 28.

**Claims**

1. A hot-filled, food-containing plastics container which is protected from side wall paneling or deformation due to the development of a vacuum inside the container upon cooling of the food product therein, the container comprising a flanged, open-top body with a closure disc secured across its flanged top and with a bottom having a flexible bottom configuration that is able to adopt an inwardly-flexed position to reduce the vacuum created when the food product cools, characterised in that the container when hot filled and hermetically closed has a head space left above the food product, which has a significant moisture vapor pressure when introduced into the container at a temperature of e.g. up to about 190°F (88°C) so that, upon cooling to ambient temperature, vacuum is developed by condensation of the moisture vapor in the head space, the container being further characterised by:

(1) its open-top plastics body (10) being of multilayer construction and including a gas barrier layer (36), and

(2) a gas-impermeable flexible closure disc (55) being secured to the flange (28) at the top of said body (10) by means of an adhesive to provide an hermetic seal which (a) withstands the said vacuum developed during cooling, yet (b) has a peel strength affording easy peel removal of the disc from the flange (28);

the container after filling being further characterised in that its bottom wall (20), which is adapted by flexure means (22) to flex inwardly, and the closure disc (55) each move, from an unflexed, generally planar initial position at the time of hot filling and sealing, to an inwardly flexed position due to the vacuum so as to reduce the vacuum as it develops during cooling, the head space permitting inward movement of the closure disc (55), and the inward flexing of the closure disc (55) and integral bottom (20) cooperatively serving to dissipate a potentially high internal vacuum, whereby the side wall (12) extending from the bottom wall (20) to the flange (28) is prevented from paneling and the hermetic seal is prevented from prematurely rupturing.

2. The container according to claim 1, wherein said plastic body comprises a plurality of contiguous layers of plastics materials including the gas barrier layer, and preferably one of said layers is a bulk layer formed at least in part from reground scrap comprising a mixture of the materials constituting the other layers.

3. The container according to claim 1 or claim 2, wherein the adhesive seal has a T-peel strength of from 3 to 5 pounds per inch (536 to 893 g/cm) which is a sufficient strength to maintain the integrity of the seal during processing, handling, and extended vacuum load thereon.

4. The container according to any of claims 1 to 3, wherein the body (10) and closure disc (55) each include an ethylene vinyl alcohol copolymer as a gas barrier layer.

5. The container according to any of claims 1 to 4, wherein the side wall (12) is of tapering frustoconical configuration throughout a major portion of its length and merges into a generally cylindrical, rigid pedestal wall (14, 18) of lesser diameter, than the smaller, lower end of the side wall, the said pedestal wall merging into the bottom wall (20).

6. A container according to claim 5, wherein the pedestal wall (14, 18) is connected to the frustoconical side wall (12) by means of an upwardly and outwardly angularly extending reinforcing wall (16) which extends at an angle of about 45° to the container longitudinal axis, and by an upwardly and outwardly curving rounded corner between the reinforcing wall (16) and the side wall (12).

7. The container according to any of claims 1 to 6 further including stacking formations in the side wall which rigidify the side wall and permit easily separable nesting of empty container bodies.

8. The container according to any of claims 1 to 7, wherein its interior volume is substantially entirely occupied by the food product at ambient temperature, after the bottom (20) and closure disc (55) have adopted their inwardly-flexed positions.

9. A kit of parts for use in producing a filled food container according to any of claims 1 to 8, comprising the said container body and the closure disc, each as defined in any of the aforesaid claims, for adhesive securement to one another to form the hermetically sealed enclosure.

10. A method of packaging a food product in a plastics container having a closure sealed to a flange at the top of the body, the food product being introduced by hot filling e.g. at a temperature up to about 190°F (88°C) whereby an interval vacuum is allowed to develop in the container upon cooling of the product, the method being characterised by:

employing an open-top multi-layer plastics container body which includes a gas barrier layer and has a side wall extending from its top flange down to an integral bottom wall, and the bottom wall—as is known—being adapted and allowed to flex inwardly in response to the development of the internal vacuum,

employing a flexible, gas barrier closure disc for closing the container,

filling the container with the hot foodstuff at a temperature as aforesaid, so as to leave an unfilled head space above the product in the container,

promptly closing the open top by securing the closure disc to the flange using an adhesive which provides an hermetic seal which withstands potentially high end enduring internal vacuum in the container yet nevertheless permits easy peel-stripping of the closure disc from the container, the disc being applied substantially flat across the top of the container body initially, and the disc being free to flex inwardly from its initial position due to the head space, and

after closing the container, allowing the product to cool, whereby inward flexings of both the bottom wall and closure disc, as vacuum develops in the container cooperate to prevent a damagingly high internal vacuum forming such that, acting in concert the inward flexings prevent inward paneling of the side wall.

11. The method according to claim 10, characterised by employing a container body made from a plurality of contiguous layers of plastics material, one layer being the gas barrier layer, and one layer preferably being a bulk layer formed at least in part from reground scrap comprising a mixture of the materials constituting the other layers.

12. The method according to claim 10 or claim 11, wherein the closure disc is bonded to the sealing surface with an adhesive which yields a T-peel strength of 3 to 5 pounds per inch (536 to 893 g/cm) which is a sufficient strength to maintain the integrity of the seal during processing, handling, and extended vacuum load thereon.

**Patentansprüche**

1. Mit Nahrungsmitteln heiß befüllter und vor Deformationen oder Verformungen der Seitenwandungen durch den während des Erkaltens der Nahrungsmittel entstehenden Unterdruck geschützter Kunststoffbehälter, der ein umbördeltes, oben offenes Gehäuse mit einem Verschlußdeckel aufweist, der an der Umbördelung befestigt ist, und mit einer flexiblen, zwecks Verringerung des Unterdrucks beim Erkalten der Nahrungsmittel nach innen biegsamen Bodengestaltung, dadurch gekennzeichnet, daß nach dem Befüllen und luftdichten Verschließen des Kunststoffbehälters ein Freiraum oberhalb des eingefüllten Nahrungsmittels verbleibt, wobei das bei Temperaturen bis zu ca. 190°F (88°C) in den Behälter eingefüllte Nahrungsmittel einen derart erheblichen Feuchtigkeitsdampfdruck aufweist, daß beim Erkalten des Nahrungsmittels auf Umgebungstemperatur im oberen Freiraum durch Kondensation des feuchten Dampfes ein Unterdruck entsteht, und weiterhin gekennzeichnet durch folgende Merkmale:

(1) das oben offene Kunststoffgehäuse (10) ist mehrlagig ausgebildet und weist eine Gassperrschicht (36) auf, und

(2) der gasundurchlässige, flexible Verschlußdeckel (55) ist an der Umbördelung (28) im oberen Bereich des Kunststoffgehäuses (10) zwecks luftdichter Abdichtung mittels einer Klebemasse befestigt, die (a) dem während des Erkaltens entstehenden Unterdruck standhält und (b) eine Abziehfestigkeit aufweist, die ein leichtes Abziehen des Verschlußdeckels von der Umbördelung (28) ermöglicht;

der Behälter ist nach dem Befüllen weiterhin dadurch gekennzeichnet, daß seine Bodenwandung (20), die für die Innenbiegung mit biegsamen Elementen (22) versehen ist, und der Verschlußdeckel (55) sich jeweils aus einer zum Zeitpunkt des Einfüllens des heißen Nahrungsmittels und des luftdichten Verschließens ungebogenen, im wesentlichen planaren Anfangsstellung durch den während des Erkaltens entstehenden Unterdruck zwecks Verringerung des Unterdrucks nach innen biegen, wobei der obere Freiraum die Einwärtsbewegung des Verschlußdeckels (55) ermöglicht und die Innenbiegung des Verschlußdeckels (55) sowie die einstückige Bodenwandung (20) insgesamt zum Verbrauch der hohen inneren Unterdruckenergie dienen, so daß eine Verformung der sich von der Bodenwandung (20) bis zu der Randumbördelung (28) erstreckenden Seitenwandung (12) und eine vorzeitige Zerstörung der luftdichten Abdichtung vermieden ist.

2. Behälter nach Anspruch 1, dadurch gekennzeichnet, daß das Kunststoffgehäuse eine Mehrzahl aneinander angrenzender Kunststoffschichten einschließlich der Gassperrschicht umfaßt und vorzugsweise eine dieser Schichten als Hauptschicht ausgebildet ist, die zumindest teilweise aus aufbereiteten Abfallmaterialmischungen der Materialien besteht, aus denen die anderen Schichten hergestellt sind.

3. Behälter nach Anspruch 1 oder 2, dadurch gekennzeichnet, daß die Klebeabdichtung eine Abziehfestigkeit von 3 bis 5 Pfund pro Inch (536 bis 893 g/cm) hat und somit eine ausreichende Festigkeit aufweist, um eine hinreichende Beschaffenheit der Dichtung während der Verarbeitung, der Behandlung und der längeren Unterdruckbeanspruchung sicherzustellen.

4. Behälter nach einem der Ansprüche 1 bis 3, dadurch gekennzeichnet, daß das Gehäuse (10) und der Verschlußdeckel (55) jeweils ein Äthyl-Vinyl-Alkohol-Copolymer als Gasschutzschicht aufweisen.

5. Behälter nach einem der Ansprüche 1 bis 4, dadurch gekennzeichnet, daß die Seitenwandung (12) in einem überwiegenden Längenbereich eine sich verjüngende, stumpfkegelige Gestalt hat und in eine im allgemeinen zylindrische, starre Fußgestellwand geringeren Durchmessers als das schmalere untere Ende der Seitenwandung übergeht und daß die Fußgestellwand in die Bodenwand (20) übergeht.

6. Behälter nach Anspruch 5, dadurch gekennzeichnet, daß die Fußgestellwand (14, 18) mit der stumpfkegeligen Seitenwand (12) durch eine nach oben und nach außen winkelförmig sich erweiternde verstärkte Wand (16), welche sich mit einem Winkel von ca. 45° zur Behälterlängsachse erweitert, und durch ein nach oben und außen gebogenes, rundes, zwischen der verstärkten Wand (16) und der Seitenwand (12) vorgesehenes Eckteil verbunden ist.

7. Behälter nach einem der Ansprüche 1 bis 6, dadurch gekennzeichnet, daß zur biegefesten Verstärkung der Seitenwandung und zur leichten Ineinanderstapelung leerer Behältergehäuse die Seitenwand mit zusammengesetzten Schichtenbildungen versehen ist.

8. Behälter nach einem der Ansprüche 1 bis 7, dadurch gekennzeichnet, daß der Behälterinnenraum, nachdem der Boden (20) und der Verschlußdeckel (55) ihre nach innen gebogene Lage eingenommen haben, im wesentlichen vollständig mit dem auf Außentemperatur erkalteten Nahrungsmittel ausgefüllt ist.

9. Bauteilesatz zur Herstellung eines gefüllten Nahrungsmittelbehälters nach einem der Ansprüche 1 bis 8, dadurch gekennzeichnet, daß diese ein Behältergehäuse und einen Verschlußdeckel in der in einem der vorangehenden Ansprüche beschriebenen Art mit gegenseitiger Klebebefestigung zur luftdichten Abdichtung des Behälterinnenraumes aufweist.

10. Verfahren zum Bevorraten von Nahrungsmitteln in einem Kunststoffbehälter mit einem an einer oberen Behälterumbördelung befestigten Verschlußdeckel, wobei das Nahrungsmittel z.B. mit einer Temperatur von bis zu ca. 190°F (88°C) in den Behälter eingefüllt wird und sich innerhalb des Behälters nach Erkalten des Nahrungsmittels ein Unterdruck bilden kann, gekennzeichnet durch folgende Merkmale:

Verwendung eines oben offenen, vielschichtigen Kunststoffbehälters mit einer Gasschutzschicht und einer Seitenwandung, die sich von der oberen Umbördelung bis zu einer einstückigen Bodenwandung erstreckt, wobei die Bodenwandung bei Auftreten eines inneren Unterdruckes in der Lage ist, sich nach innen zu biegen;

Verwendung eines flexiblen Gasschutzverschlußdeckels zum Verschließen des Behälters;

Befüllen des Behälters mit auf vorgenannte Temperatur erwärmten Nahrungsmittel derart, daß oberhalb des in den Behälter eingefüllten Nahrungsmittelprodukts ein Freiraum verbleibt;

sofortiges Verschließen der oberen Behälteröffnung durch Befestigen eines Verschlußdeckels an der oberen Behälterumbördelung mittels eines Klebers, wodurch eine druckdichte Abdichtung geschaffen ist, die der hohen und langandauernden Unterdruckengergie im Behälterinneren standhält jedoch ein leichtes Abziehen des Verschlußdeckels vom Behälter ermöglicht, wobei der Verschlußdeckel anfangs im wesentlichen flach am oberen Rand des Behälters angebracht ist und der Verschlußdeckel sich aufgrund des oberen Freiraumes und seiner anfänglichen Lage nach innen biegen kann; und

nach Verschließen des Behälters das Nahrungsmittel erkalten lassen, wobei bei Entstehung eines Unterdruckes im Behälterinneren sich seine Bodenwandung und der Verschlußdeckel derart nach innen biegen, daß ein hoher, ein Eindrücken der Seitenwände verursachender innerer Unterdruck vermieden wird.

11. Verfahren nach Anspruch 10, gekennzeichnet durch die Verwendung eines aus einer Anzahl angrenzender Kunststoffmaterialschichten hergestellten Behälters, wobei eine Schicht als Gassperrschicht ausgebildet ist und eine vorzugsweise als Hauptteilschicht ausgebildete Schicht zumindest bereichsweise aus aufbereitetem Abfallmaterial besteht, das eine Mischung aus die anderen Schichten bildenden Materialien enthält.

12. Verfahren nach Anspruch 10 oder 11, dadurch gekennzeichnet, daß der Verschlußdeckel auf die Dichtoberfläche mit einem Kleber aufgeklebt ist, so daß sich eine Abziehfestigkeit von 3 bis 5 Pfund/lnch (536 bis 893 g/cm) und somit eine hinreichende Festigkeit ergibt, um eine ausreichende Dichtungsbeschaffenheit während der Verarbeitung, der Behandlung und ausgedehnten Unterdruckbeanspruchung sicherzustellen.

**Revendications**

1. Récipient en matière plastique destiné à contenir des aliments qui y sont versés à l'état chaud, ledit récipient étant protégé contre la déformation ou la division en panneaux de la paroi latérale due au développement d'un vide à l'intérieur du récipient après le refroidissement du produit alimentaire qui s'y trouve, le récipient comprenant un corps ouvert vers le haut et pourvu d'un bord, un disque de fermeture fixé à travers sa partie supérieure pourvue dudit bord et un fond d'une configuration flexible qui peut adopter une position courbée vers l'intérieur pour réduire le vide créé par le refroidissement du produit alimentaire, caractérisé en ce que le récipient, quand il est rempli à chaud et fermé de façon hermétique, a un espace supérieur restant au-dessus du produit alimentaire qui a une pression de vapeur importante, quand il est introduit dans le récipient à une température de par exemple jusqu'à environ 190°F (88°C), de sorte qu'après refroidissement à la température ambiante un vide est développé par condensation de la vapeur dans l'espace supérieur, le récipient étant en outre caractérisé en ce que:

(1) son corps (10) en matière plastique ouvert vers le haut est d'une construction multi-couches et comprend une couche (36) imperméable aux gaz, et

(2) un disque (55) de la fermeture flexible imperméable aux gaz et fixé au bord (28) en haut dudit corps (10) au moyen d'un adhésif pour réaliser un joint étanche qui (a) résiste audit vide développé pendant le refroidissement et (b) a quand même une résistance à l'exfoliation permettant l'enlèvement du disque du bord (28) facilement par pelage;

le récipient, après le remplissage, étant en outre caractérisé en ce que sa paroi inférieure (20), qui est adapté par des moyens de flexion (22) de se courber vers l'intérieur, et le disque de fermeture (55) se déplace chacun d'une position initiale non courbée, généralement plane au moment du remplissage à chaud et de la fermeture, vers une position courbée vers l'intérieur due au vide de sorte à réduire le vide pendant son développement lors du refroidissement, l'espace supérieur permettant un déplacement vers l'intérieur du disque de fermeture (55), et la courbure vers l'intérieur du disque de fermeture (55) et du fond (20) intégral servant de façon coopérante à dissiper un vide intérieur potentiellement élevé de sorte que la paroi latérale (12), s'étendant du fond (20) vers le bord (28) est empêchée de se diviser en panneaux et le joint hermétique est empêché de rompre de façon prématurée.

2. Récipient selon la revendication 1, dans lequel le corps plastique comprend plusieurs couches contiguës de matières plastiques, y compris la couche imperméable aux gaz, et dans lequel de préférence une desdites couches est une couche principale formée au moins partiellement de déchêts rebroyés composés d'un mélange des matières constituant les autres couches.

3. Récipient selon la revendication 1 ou 2, dans lequel le joint adhésif a une résistance à l'exfoliation de 3 à 5 pounds/inch (536 à 893 g/cm) qui est une résistance suffisante pour maintenir l'intégrité du joint pendant le traitement, la manipulation et l'effort prolongé exercé sur lui par le vide.

4. Récipient selon l'une quelconque des revendications 1 à 3, dans lequel le corps (10) et le disque de fermeture (55) contiennent chacun un copolymère d'éthylènealcool vinylique comme couche imperméable aux gaz.

5. Récipient selon l'une quelconque des revendications 1 à 4, dans lequel la paroi latérale (12) a une forme de tronc de cône sur une partie majeure de sa longueur qui passe dans une paroi (14, 18) rigide, généralement cylindrique formant un pied d'un diamètre inférieur que l'extrémité inférieur plus petite de la paroi latérale, ladite paroi formant pied passant dans la paroi de fond (20).

6. Récipient selon la revendication 5, dans lequel la paroi (14, 18) formant pied est connectée à la paroi latérale (12) tronconique au moyen d'une paroi (18) de renforcement s'étendant de façon angulée vers l'extérieur et qui forme un angle d'environ 45° avec l'axe longitudinal du récipient et par un coin arrondi tournant vers le haut et vers l'extérieur entre la paroi de renforcement (16) et la paroi latérale (12).

7. Récipient selon l'une quelconque des revendications 1 à 6, comprenant en outre des structures d'empilage dans la paroi latérale qui rendent la paroi latérale plus rigide et permettent un emboîtement facilement séparable de corps de récipient vides.

8. Récipient selon l'une quelconque des revendications 1 à 7, dans lequel son volume intérieur est substantiellement entièrement occupé par le produit alimentaire à température ambiante après que le fond (20) et le disque de fermeture (55) ont adopté leur position courbée vers l'intérieurieur.

9. Un jeu de pièces destinées à être utilisées dans la production d'un récipient rempli d'aliments selon l'une quelconque des revendications 1 à 8, comprenant ledit corps de récipient et ledit disque de fermeture, chacun tel que défini dans l'une quelconque des revendications précédentes, pour fixation adhésive de l'un à l'autre pour former une enceinte fermée hermétiquement.

10. Méthode pour emballer un produit alimentaire dans un récipient en plastique ayant une fermeture jointe à un bord en haut du corps, le produit alimentaire étant introduit par remplissage à chaud, par exemple à une température jusqu'à environ 190°F (88°C), ce qui permet à un vide interne de se former dans le récipient après le refroidissement du produit, la méthode étant étant caractérisée en ce qu'on utilise un corps de récipient en matière plastique multicouches ouvert vers le haut, qui comprend une couche imperméable aux gaz et a une paroi latérale s'étendant de son bord supérieur vers le bas vers un fond intégral et le fond étant adapté pour et pouvant—d'une manière connue—se courber vers l'intérieur en réponse au développement du vide interne, qu'on emploie un disque de fermeture flexible imperméable aux gaz pour fermer le récipient, qu'on remplit le récipient avec le produit alimentaire chaud à une température telle que indiquée ci-dessus de sorte à laisser un espace supérieur non rempli au-dessus du produit dans le récipient, et qu'on ferme de suite la partie supérieure ouverte en fixant le disque de fermeture au bord en utilisant un adhésif qui réalise un joint hermétique qui résiste à un vide interne potentiellement élevé et durable dans le récipient et permet cependant quand même un enlèvement facile par pelage du disque de fermeture du récipient, le disque étant appliqué à l'état substantiellement plat à travers la partie supérieure du récipient au début et le disque étant libre de se courber vers l'intérieur de sa position initiale, dû à l'espace supérieur, et qu'on permet après la fermeture du récipient au produit de se refroidir de sorte que les courbures vers l'intérieur du fond et du disque de fermeture, quand le vide se développe dans le récipient, coopèrent pour éviter la formation d'un vide intérieur hautement endommageant de sorte que par leur action concertée les courbures vers l'intérieur évitent des panneaux courbés vers l'intérieur sur la paroi latérale.

11. Méthode selon la revendication 10, caractérisé en ce qu'on emploie un corps de récipient fabriqué à partir d'une pluralité de couches contiguës de matières plastiques dont une couche est la couche imperméable aux gaz et une couche étant de préférence une couche principale formée au moins en partie de déchêts rebroyés composés d'un mélange de matières constituant les autres couches.

12. Méthode selon la revendication 10 ou 11, dans laquelle le disque de fermeture est collé à la surface de jonction au moyen d'un adhésif qui réalise une résistance à l'exfoliation de 3 à 5 pounds/inch (536 à 893 g/cm) qui est une résistance suffisante pour maintenir l'intégrité du joint pendant le traitement, la manipulation et l'effort prolongé exercé sur lui par le vide.

FIG.1

FIG.2

FIG.3

FIG.4

FIG.6

# FIG.5